Europäisches Patentamt

European Patent Office

Office européen des brevets

(19)

(11) EP 0 845 852 A2

(12) **EUROPEAN PATENT APPLICATION**

(43) Date of publication:
03.06.1998 Bulletin 1998/23

(51) Int Cl.⁶: **H02M 3/156**

(21) Application number: 97309572.2

(22) Date of filing: 27.11.1997

(84) Designated Contracting States:
**AT BE CH DE DK ES FI FR GB GR IE IT LI LU MC NL PT SE**
Designated Extension States:
**AL LT LV MK RO SI**

(30) Priority: 27.11.1996 JP 316350/96

(71) Applicant: **TEXAS INSTRUMENTS INC.**
**Dallas, Texas 75243 (US)**

(72) Inventors:
• **Nakai, Kazuya**
  **Ikoma-gun, Nara 636-0935 (JP)**
• **Inomata, Hiroyasu**
  **Toyonaka-Shi, Ohsaka-Fu, OS (JP)**

(74) Representative:
**Blanco White, Henry Nicholas et al**
**ABEL & IMRAY**
**Northumberland House**
**303-306 High Holborn**
**London WC1V 7LH (GB)**

(54) **A power source driving device**

(57) To provide a power source driving device which has a common time constant circuit (capacitor) for the soft start circuits of multiple power source devices. When the power source is switched in, power source voltage reset circuit 44 deactivates control signal ENA3 (reset signal XRST). When sequence control unit 3 sets the logic values of control signals CH1ENA and CH1SOFT to 1, a soft start is performed to gradually raise the output voltage of the first output circuit in response to voltage signal VSCP. When capacitor C1 in start control unit 22 is charged gradually, and when sequence control unit 3 sequentially sets the logic values of control signals CH2ENA, CH2SOFT, CH3SOFT to 1 in response to the charging voltage, a soft start is performed for the second and substantial output circuits. When sequence control unit 3 sets the logic value of timing signal SPECENA to 1 after the soft start is finished for all of the output circuits, the voltages of the output circuits are monitored, and circuit protection occurs.

FIG. 2

## Description

### FIELD OF INVENTION

The present invention pertains to a power source driving device for driving output circuits of switching regulators or other power source devices.

### BACKGROUND OF THE INVENTION

Conventionally, a switching regulator has been used as a power source device. In general, a soft start circuit is added in the drive circuit of the switching transistor of a switching regulator to prevent an overshoot of the rising waveform of the output voltage as well as damage to the switching transistor caused by the in rush current for charging the output capacitor at the time of start.

The soft start circuit usually has a configuration such that it gradually increases the output voltage (soft start) by gradually increasing the period in which the switching transistor is in a conductive state (on-duty period), at a prescribed time after starting. For example, the on-duty of the switching transistor is controlled such that the output voltage rises in response to the waveform of the charging voltage of a capacitor in a time constant circuit. This type of soft start circuit is also included in an IC for driving a conventional switching transistor.

However, because ±15 V should be provided from the power source to an op-amp IC, and 5 V should be provided from the power source to a logic IC, it is necessary to provide multiple switching regulators in one device. In this case, it is necessary to attach a soft start circuit and a time constant circuit to each of the multiple switching regulators. As a result, the number of parts is increased.

Also, when multiple switching transistor drive circuits are assembled in one IC, terminals (attached capacitors) for the time constant circuit in each drive circuit are necessary, and this pin neck results.

### SUMMARY OF THE INVENTION

In order to realise the aforementioned purposes, the present invention provides a power source driving device having : a first timing signal showing the timing for starting multiple power sources; a starting waveform generating means which generates the waveforms of the output voltages of the aforementioned power sources at the time of start in response to the aforementioned first timing signal; an output voltage waveform generating means which generates the waveforms of the output voltages of the aforementioned multiple power sources based on the preset reference output voltages of the aforementioned multiple power sources and on the waveforms of the output voltages generated when the aforementioned multiple power sources are started; and a power source driving means which drives the aforementioned multiple power sources based on the generated waveforms of the output voltages of the aforementioned multiple power sources.

It is preferred that the aforementioned starting waveform signal generating means have; a time constant means which uses capacitor; a charge/discharge means which charges and discharges the capacitor in the aforementioned time constant circuit in response to the aforementioned first timing signal; and a waveform allocation means which can allocate the output voltage of the aforementioned time constant means as the waveforms of the output voltages of the aforementioned multiple power sources in response to the aforementioned first timing signal.

It is preferred also to have; a second timing signal generating means which generates a second timing signal in response to the aforementioned first timing signal to show that all of the aforementioned multiple power sources have been started; an output voltage detection means which in response to the aforementioned second timing signal checks the output voltage of each of the aforementioned power sources to detect output voltages out of a prescribed range; and a drive stopping means which stops the operation of the aforementioned power source driving means for driving the aforementioned multiple power sources when the output voltage of any of the aforementioned multiple power sources is found to be out of the prescribed range.

### BRIEF DESCRIPTION OF THE DRAWINGS

The present invention will now be further described, by way of example, when reference to the accompanying drawings in which:

FIG.1: A diagram illustrating the configuration of switching regulation which uses drive unit of the present invention.

FIG.2: A diagram illustrating the configuration of the drive unit of the present invention shown in FIG.1.

FIG.3: A diagram illustrating the configuration of the start control unit of the drive unit shown in FIG.2.

FIG.4: A diagram illustrating the configuration of the SCP unit of the drive unit shown in FIG.2.

FIG.5: A diagram illustrating the configuration of the error amplifying unit of the drive unit shown in FIG.2.

FIG.6: A diagram illustrating the configuration of the error detector of the drive unit shown in FIG.2.

FIG.7: A diagram illustrating the configuration of the sequence control unit of the drive unit shown in FIG.2.

FIG.8: A diagram illustrating the configuration of the analog switch unit of the drive unit shown in FIG.2.

FIG.9: A diagram illustrating the configuration of the output circuit shown in FIG.1.

FIG.10(A)-(N) are timing charts illustrating the timings of the operations of the various parts in drive unit (2) shown in FIG.2.

FIG.11: A diagram illustrating the configuration of a modified example of the drive unit of the present invention shown in FIG.1.

FIG.12: A diagram illustrating the configuration of the error amplifying unit of the drive unit shown in FIG. 11.

FIG.13: A diagram illustrating the configuration of the analog switch unit of the drive unit shown in FIG.11.

FIG.14: A diagram illustrating the configuration of a modified example (SCP unit) of the SCP unit shown in FIG.4.

FIG.15: A diagram illustrating the configuration of a modified example of the error amplifying unit shown in FIG.5.

DESCRIPTION OF EMBODIMENTS

In the figures, 1 represents a switching regulator, 10 voltage dividing cc, 12-12c output circuit, 2, 4 drive unit, 22 start control unit 24, 56 SCP unit, 240 time constant circuit, 560 adding circuit, 26, 50, 58 error amplifying unit, 260-264, 584-586 error amplifier, 28 error detector, 32a-32c,54a-54c comparator, 34a-34c drive circuit, 38, 52 analog switch unit, 40 SCP error latch circuit, 42 triangular wave generating circuit, 44 power source voltage reset circuit, 3 sequence control unit, 300 channel decoder circuit, 302a CH1 soft start latch circuit, 302D CH2 soft start latch circuit, 302c CH3 soft start latch circuit, 304 SCP mode latch circuit.

The power source driving device of the present invention, for example, as a drive circuit for switching transistors (power sources) of switching regulators, soft starts multiple (n) switching transistors in sequence to supply electric power at respective present voltages.

The first timing signal generating means, for example, generates the first timing signal showing the timing for sequentially starting n switching transistors at a prescribed time interval by comparing the voltage signal, generated by a time constant circuit having a capacitor, with n-1 threshold voltages.

The starting waveform generating means has a time constant circuit which uses a capacitor. The starting waveform generating means, for example, charges the capacitor in the time constant circuit when the first timing signal shows the beginning of the soft start of the kth (15k5n) switching transistor, and discharges the capacitor at the end of the soft start of the kth switching transistor. In this way, the output voltage of the time constant circuit becomes a signal showing the voltage waveform obtained by rectifying the output during the soft start of the kth switching transistor.

The output voltage waveform generating means, at the end of the soft start, switches the output voltage waveform signal generated by the starting waveform generating means at the time of soft start to the rectified output voltage of the kth switching transistor, and generates a signal showing the voltage waveform after the output of the kth switching transistor is rectified during and after the soft start.

The power source driving means, for example, uses the PWM signal, which is generated by comparing the voltage waveform signal generated by the output voltage waveform generating means with a prescribed triangular wave signal, to drive the switching transistor such that the value of the rectified output voltage of the switching transistor is equal to the value shown by the voltage waveform signal generated by the output voltage waveform generating means.

In the following, embodiments of the present invention will be explained.

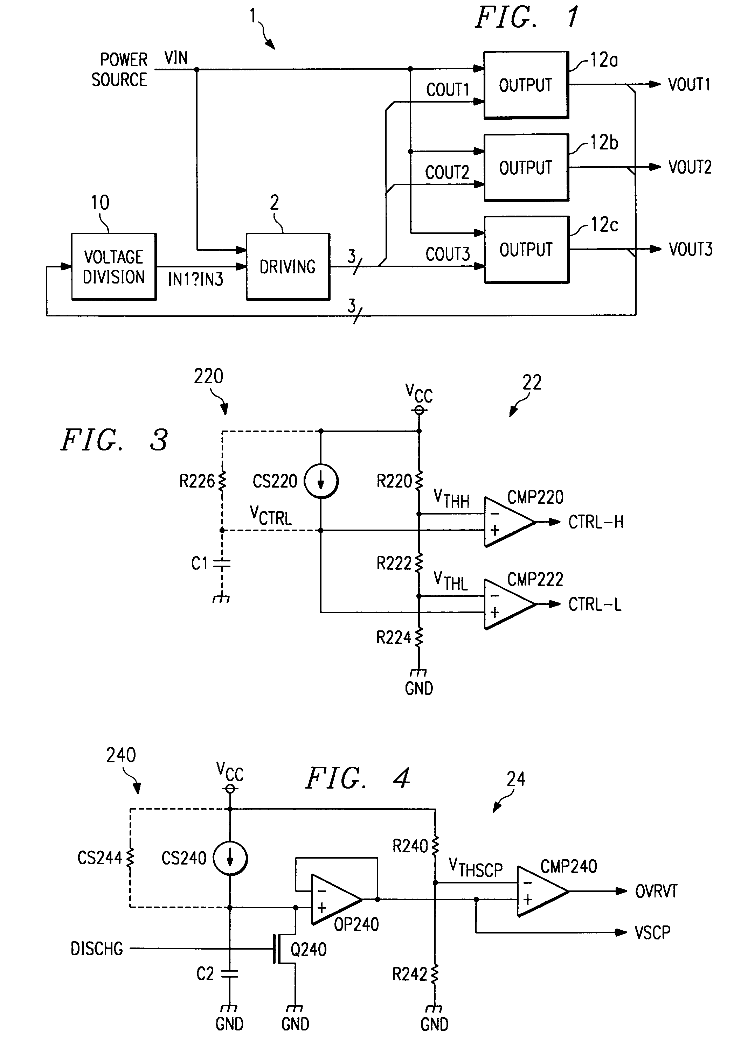

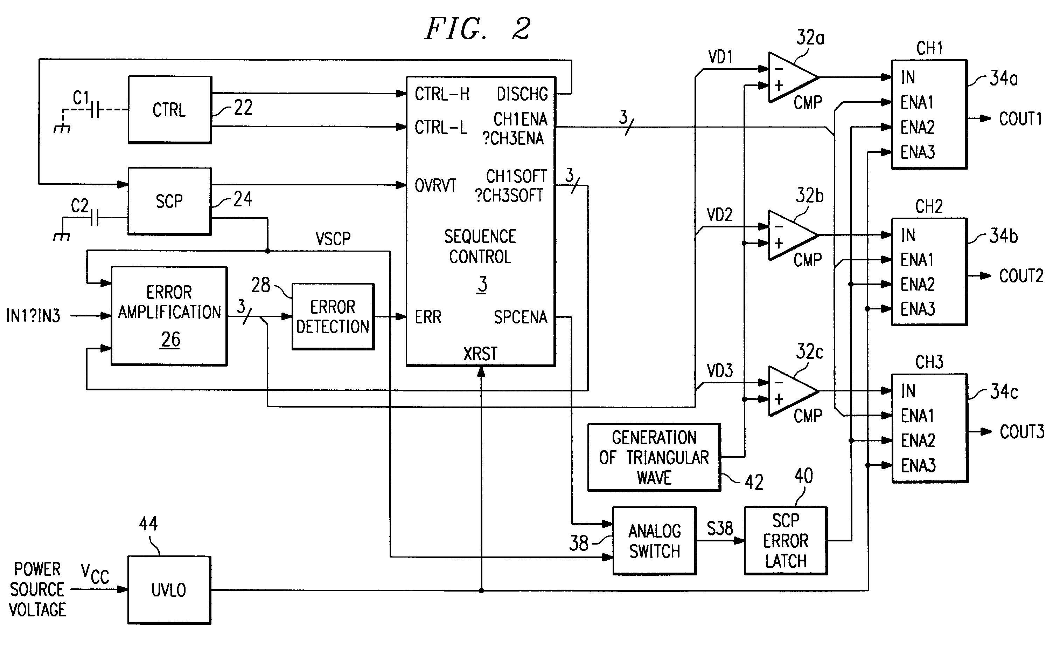

FIG.1 is a diagram illustrating the configuration of switching regulator 1 which uses drive unit 2 disclosed in the present invention.

As shown in FIG.1, switching regulator 1 comprises voltage dividing circuit 10, drive unit 2, and multiple output circuits 12a-12c. In the following example, n, the number of output circuits 12a-12c, is taken as 3.

When switching regulator 1 is started, the output voltages of the output circuits are raised gradually by these constituent parts for a prescribed period of time to perform soft start. After the period of soft start, three types of electric power under the voltages equal to the respective preset voltages are provided to loads (not shown in the figure). After the soft start is finished for all of the output circuits, switching regulator 1 stops providing the electric power to protect the circuits when abnormal output voltages are generated due to a short of the loads, etc.

Explanation of the various constituent parts in switching regulator 1

In the following, the constituent parts of switching regulator 1 will be explained with reference to FIGS. 2-9.

Voltage dividing circuit 10

In switching regulator 1, a voltage dividing circuit using resistors can be used as voltage dividing circuit 10 (FIG.1). The voltage dividing circuit divides the output voltages of output circuits 12a-12c and outputs them to drive unit 2 as feedback signals IN1-IN3. The dividing ratio set in voltage dividing circuit 10 specifies output voltages VOUT of output circuits 12a-12c.

Drive unit 2

FIG.2 is a diagram illustrating the configuration of drive unit 2 disclosed in the present invention and shown in FIG.1.

As shown in FIG.2, drive unit 2 comprises start control unit (CTRL) 22, short circuit protection SCP unit 24, error amplifier 26, error detector 28, sequence control unit 3, comparison circuits 32a-32c, drive circuits 34a-34c, analog switch 38, short circuit protection SCP error latch circuit 40, triangular wave generating circuit 42, and power source voltage reset circuit (UVLO) 44, which are accommodated in one IC.

Drive unit 2 makes use of the aforementioned constituent parts to drive output circuits 12a-12c (FIG.1), controlling the output voltages.

Low voltage reset circuit 44

When the voltage of positive power source $V_{cc}$ is not in normal range, power source voltage reset circuit 44 deactivates control signal ENA3 (makes it logic value O) to inhibit the outputs of drive circuits 34a-34c, when the voltage of positive power source $V_{cc}$ is in a normal range, activates control signal ENA (makes it logic value 1) enabling the outputs of drive circuits 34a-34c. Also, power source voltage reset circuit 44 provides control signal ENA3 as the reset signal to the XRST terminal of sequence control unit 3.

Start control unit 22

FIG.3 is a diagram illustrating the configuration of start control unit 22 of drive unit 2 shown in FIG.2.

As shown in FIG.3, start control unit 22 comprises comparators CMP220 and CMP222, resisters R220, R222, and R224, current source (SC 220) or resistor R226, and capacitor C1 which is added if necessary.

Resistors R220, R222, and R224 are connected each in series between positive power source voltage Vcc and ground GND to divide positive power source voltage Vcc of drive unit 2 to generate threshold voltages $V_{THH}$ and $V_{THL}$ ($V_{THH} > V_{THL}$), which are sent to the negative input terminals of comparators CMP220 and CMP222, respectively.

Current source CS22) (resistor 226) and capacitor C1 form time constant circuit 220 to send charging voltage $V_{CTML}$ of capacitor C1 to the positive input terminals of comparators CMP220 and CMP222.

Comparator CMP220 compares charging voltage $V_{CTRL}$ of capacitor C1 in time constant circuit 220 with threshold voltage $V_{THH}$. If charging voltage $V_{CTRL}$ is higher than threshold voltage $V_{THH}$, logic value 1 is sent as timing signal CTRL-H to sequence control unit 3. On the other hand, if charging voltage $V_{CTRL}$, is lower than threshold voltage $V_{THH}$, logic value O is sent as timing signal CTRL-H to sequence control unit 3.

Comparator CMP222 compares charging voltage $V_{CTRL}$ of capacitor C1 in time constant circuit 220 with threshold voltage $V_{THL}$. If charging voltage $V_{CTRL}$ is higher than threshold voltage $V_{THL}$, logic value 1 is sent as timing signal CTRL-L to sequence control unit 3, and if charging voltage $V_{CTRL}$ is lower than threshold voltage $V_{THL}$, logic value O is sent.

In other words, the logic value output from comparators CMP22) and CMP222 (timing signals CTRL-H and CTRL-L) become (OO) when charging voltage $V_{CTRL}$ is in the range of O V (ground voltage GND - threshold voltage $V_{THL}$, (01) when charging voltage $V_{CTRL}$ is in the range of threshold voltage $V_{THL}$ - threshold voltage $V_{THL}$, and become (11) when charging voltage $V_{CTRL}$ is in the range of threshold voltage $V_{THH}$ - positive power source voltage $V_{cc}$.

When capacitor C1 is not used, both of the logic values of the output signals of comparators CMP220 and CMP222 (timing signals CTRL-H and CTRL-L) become 1 immediately after starting to simultaneously initiate the soft start function with respect to switching regulator 1. In FIG.3, one end of resistor R22) is connected to positive power source voltage $V_{cc}$. However, instead of positive power source voltage $V_{cc}$, it is also possible to connect (this resistor) to constant voltage generated by a constant power source inside the IC.

SCP unit 24

FIG.4 is a diagram illustrating the configuration of SCP unit 24 of drive unit 2 shown in FIG.2.

As shown in FIG.4, SCP unit 24 comprises op-amp OP240 acting as a voltage follower, comparator CMP240, N-channel MOSFET Q240, resistors R240 and R242, current source CS240-or resistor R244, and attached capacitor C2.

Resistors R240 and R242 are connected in series between positive power source voltage $V_{cc}$ and ground GND, dividing positive power source voltage $V_{cc}$ and generating threshold voltage $V_{THSCP}$, which is output to the negative input terminal of comparator CMP240.

Current source CS240 (resistor R244) and attached capacitor C2 form time constant circuit 240. Through op-amp OP240, the charging voltage of capacitor C2 in time constant circuit 240 is output as voltage signal VSCP to the positive input terminal of comparator CMP240, error amplifier 26, and analog switch 38.

Comparator CMP240 compares the charging voltage of capacitor C2 input through co-amp OP240 with threshold voltage $V_{THSCF}$ input from resistors R240 and R242. If the charging voltage of capacitor C2 is higher than the reference voltage, logic value 1 is output as control signal OVRT to sequence control unit 3, and if the charging voltage of capacitor C2 is lower than the reference voltage, logic value O is output.

The drain and source of FET Q240 are connected between the terminals of capacitor C2. When control signal DISCHG input to the gate of FET Q240 from sequence control unit 3 has a logic value of 1, the circuit between the two terminals of capacitor C2 is shorted to perform discharge (capacitor C2 is discharged), and when control signal DISCHG has a logic value of O, the circuit between the terminals of capacitor C2 is open to perform charging. As with the circuit shown in FIG.3, it is also possible to use an internal constant voltage $V_{REF}$ instead of positive power source voltage $V_{cc}$ is this circuit.

Error amplifying unit 26

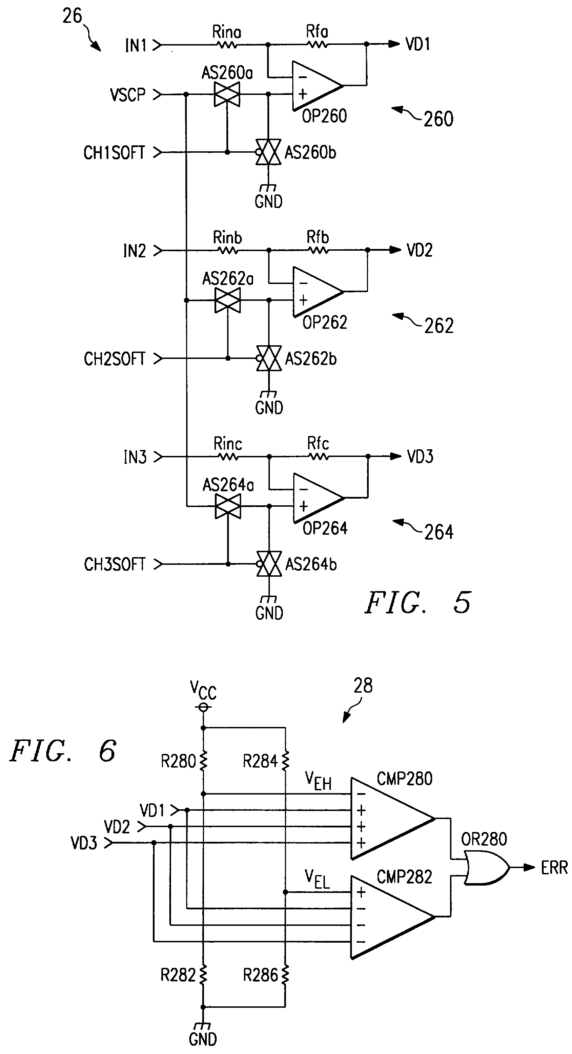

FIG.5 is a diagram illustrating the configuration of error amplifier 26 of drive unit 2 shown in FIG.2.

As shown in FIG.5, error amplifying unit 26 comprises error amplifiers 260-264. Error amplifiers 260-264 have the same configuration. Each of the error amplifiers comprises two resistors, Rina-Rinc, Rfa-Rfc, two analog switches, AS260a, AS260b, AS262a, AS262b, AS264a, AS264b, and one op-amp OP260-OP264.

Depending on the aforementioned constituent parts, error amplifying unit 26 detects and amplifies the errors between voltage signal VSCP input from op-amp OP240 of SCP unit 24 (FIGS. 2 and 4) and feedback signals INI-IN3 from voltage dividing circuit 10 (FIG.1) during the soft start period. After the end of the soft start, feedback signals IN1-IN3 are amplified and output as error signals VD1-VD3 to error detector 28 and comparators 32a-32c.

For error amplifier 260 262, 264 in error amplifying unit 26, analog switch AS2650a (AS262a, AS264a) is in the on state when control signal CH1SOFT (CH2SOFT, CH3SOFT) has a logic value of 1. As a result, voltage signal VSCP is allowed to pass and is sent to the noninverting input terminal (+) of op-amp OP260 OP262, OP264. The analog switch is in the off state when control signals CH1SOFT (CH2SOFT, CH3SOFT) has a logic value of O.

Analog switch AS260b (AS262b, AS264b) is in the on state when control signal CH1SOFT (CH2SOFT, CH3SOFT) has a logic value of O. As a result the noninverting positive input terminal is grounded (GND; O V). The analog switch is in the off state when control signal CH1SOFT (CH2SOFT, CH3SOFT) has a logic value of 1.

Resistors Rina and Rfa (Rinb, Rfb, Rinc, Rfc) as well as op-amp OP260 (OP262, OP264) form a inverting amplifier. When control signal CH1SOFT (CH2SOFT, CH3SOFT) has a logic value of O (after the end of soft start), error signal VD1, (VD2, VD3) calculated by following formula 1-1 (1-2, 1-3) is output to comparator (32a) (32b, 32c). When control signal CH1SOFT (CH2SOFT, CH3SOFT) has a logic value of 1 (during the soft start period), error signal VD1 (VD2, VD3) calculated by following formula 2-1 (2-2, 2-3) is output to omparator 32a (32b, 32c).

Formula 1

$$VD1 = (-R r a/R i n a) \times IN1 \qquad (1 - 1)$$

$$VD2 = (-R r b/R i n b) \times IN2 \qquad (1 - 2)$$

$$VD3 = (-R r c/R i n c) \times IN3 \qquad (1 - 3)$$

Formula 2

$$VD1 = (-R f a/R i n a) \times (IN1 - VSCO) + VSCP \qquad (2 - 1)$$

$$VD2 = (-R f b/R i n b) \times (IN2 - VSCP) + VSCP \qquad (2 - 2)$$

$$VD3 = (-R f c/R i n c) \times (IN3 - VSCP) + VSCP \qquad (2 - 3)$$

Error detector 28

FIG.6 is a diagram illustrating the configuration of error detector 28 of drive unit 2 shown in FIG.2.

As shown in FIG.6, error detector 28 comprises resistors R280, R282, R284, and R286, comparators CMP280 and CMP282, as well as OR circuit OR280.

Error detector 28 uses the aforementioned constituent parts to detect whether error signals VD1-VD3 input from error amplifying unit 26 are in the normal range (threshold voltage $V_{EH}$ - threshold voltage $V_{EL}$). If error signals VD1-VD3 are in the normal range, the logic value of error signal ERR becomes 1 and is output to sequence control unit 3, and if error signals VD1-VD3 are not in the normal range, the logic value of error signal ERR becomes O and is output.

In error detector 28, resistors R280 and R282 as well as resistors R284 and R286 connected between positive power source voltage $V_{cc}$ and GND form two voltage dividing circuits, respectively, to divide positive power source voltage $V_{cc}$ to obtain threshold voltages $V_{EH}$ and $V_{EL}$ ($V_{EH} > V_{EL}$), which are sent to the negative input terminal of comparator CMP280 and the positive input terminal of comparator CMP282, respectively.

Comparator CmP280 compares error signals VD1-VD3 input from error amplifying unit 26 with threshold voltage $V_{EH}$ input from the middle connection point between resistors R280 and R282. If any of error signals VD1-VD3 is higher than threshold voltage $V_{EH}$, the logic value of the output signal becomes 1 and is output to OR circuit OR280, and if all of error signals VD1-VD3 are lower than threshold voltage $V_{EH}$, the logic value of the output signal becomes O and is output.

When either of the output signals of comparators CMP260 and CMP282 has a logic value of 1, error signal ERR with a logic value of 1 is output from OR circuit OR280. When the logic values of the output signals of comparators CMP280 an CMP282 are both O, error ERR signal with a logic value of O is output from OR circuit OR280.

Sequence control unit 3

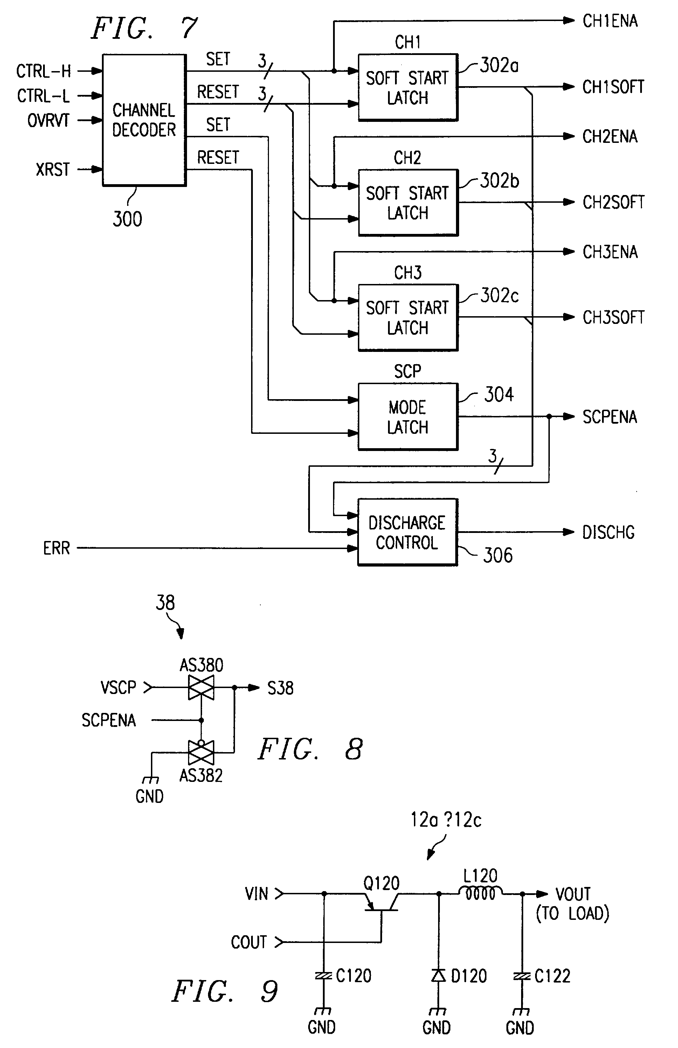

FIG.7 is a diagram illustrating the configuration of sequence control unit 3 of drive unit 2 shown in FIG.2.

As shown in FIG.7, sequence control unit 3 comprises channel decoder circuit 300, CH1 soft start latch circuit 302a, CH2 soft start latch circuit 302b, CH3 soft start latch circuit 302c, CSP mode latch circuit 304, and discharge control circuit 306.

By means of the aforementioned constituent parts, sequence control unit 3 generates control signals CH1ENA-CH3ENA, CH1SOFT-CH3SOFT, DISCHG, and timing signal SCPENA from timing signals CTRL-H and CTRL-L input from start control unit 22, control signal OVRVT input from SCP unit 24, control signal ENA3 (reset signal XRST) input from power source reset circuit 44, and error signal ERR input from error detector 28, and controls the various parts of drive unit 2.

When the power source of switching regulator 1 is switched in and started, channel decoder circuit 300 activates set signal SET (makes it logic value 1) and deactivates reset signal RESET (makes it logic value O) and outputs them to CH1 soft start latch circuit 302a. At the same time, this set signal is sent as CH1ENA to drive circuit 34a (FIG.2).

When timing signal CTRL-L input from start control unit 22 has a logic value of 1, channel decoder circuit 300 sets the logic values of the set signal and the reset signal to 1 and 0, respectively, and outputs them to CH2 soft start latch circuit 302b. At the same time, this set signal is output as CH2ENA to drive circuit 34b.

When timing signal CTRL-H input from start control unit 22 has a logic value of 1, channel decoder circuit 300 sets the logic values of the set signal and the reset signal to 1 and 0, respectively, and outputs them to CH3 soft start latch circuit 302c. At the same time, this set signal is output as CH3ENA to drive circuit 34c.

When control signal OVRVT input from CSP unit 24 has a logic value of 1, channel decoder circuit 300 sets the logic value of the reset signal for CH1 soft start latch circuit 302a-CH3 soft start latch circuit 302c to 1.

When switching regulator 1 is started, and when at least one of timing signal CTRL-H or CTRL-L has a logic value of 0, channel 1 decoder circuit 300 sets the logic values of the set signal and the reset signal to 1 and 0, respectively, and outputs them to SCP mode latch circuit 304. When the logic values of timing signals CTRL-H and CTRL-L are both 1, (and) when the logic value of control signal OVRVT becomes 1, channel decoder circuit 300 sets the logic values of the set signal and the reset signal to 1 and 0, respectively, and outputs them to SCP mode latch circuit 304.

For CH1 soft start latch circuit 302a, CH2 soft start latch circuit 302b, and CH3 soft start latch circuit 302c, the logic values of the output signals become 1 when the set signals (control signals CH1ENA-CH3ENA) input from channel decoder circuit 300 have logic values of 1, and the logic values of the output signals become 0 when the reset signals have logic values of 1, and [these] are output as control signals CH1SOFT1-CH3SOFT3 to error amplifying unit 26.

For SCP mode latch circuit 304, the logic value of the output signal (timing signal SCPENA) becomes 1 when the set signal input from channel decoder circuit 300 has a logic value of 1, and the logic value of timing signal SCPENA is reset to 0 when the reset signal has a logic value of 1.

For discharge control circuit 306, the logic value of control signal DISCHG becomes 0 and is output to SCP unit 24 when at least one of control signals CH1SOFT-CH3SOFT has a logic value of 1 and the logic value of error signal ERR becomes-0 as timing signal SCPENA has a logic value of 1. Otherwise, control signal DISCHG has a logic value of 1.

Analog switch unit 38

FIG.8 is a diagram illustrating the configuration of analog switch unit 38 of drive unit (2) shown in FIG.2.

As shown in FIG.8, analog switch unit 38 comprises two analog switches AS380 and AS382.

By means of the aforementioned constituent parts, analog switch unit 38 outputs voltage signal VSCP, input from SCP unit 24, as output signal 538 to SCP error latch circuit 40 when timing signal SCPENA has a logic value of 1, [the analog switch unit] outputs ground potential (0 V) [as output signal S38] when timing signal SCPENA has a logic value of 0.

When timing signal SCPENA has a logic value of 0, analog switch (AS380) is in a nonconductive state. When timing signal SCPENA has a logic value of 1, [analog switch (AS380)] is in a conductive state, passing voltage signal VSCP, input from SCP unit 24, as output signal S38 to SCP error latch circuit 40.

When timing signal SCPENA has a logic value of 1, analog switch (AS382) is in a nonconductive state. When timing signal SCPENA has a logic value of 0, [analog switch (AS382)] is in a conductive state, and ground potential is output as output signal S38 to SCP error latch circuit 40.

SCP error latch circuit 40

Please refer to FIG.2 again.

When the voltage of signal S38 input from analog switch unit 38 is higher than a prescribed threshold voltage $V_{THSCP}$, SCP error latch circuit 40 sets the logic value of control signal ENA2 to 0 and outputs it to drive circuits 34a-34c, and when the voltage of signal S38 is lower than threshold voltage $V_{THSCP}$, [SCP error latch circuit 40] sets the logic value of control signal ENA2 to 1 and outputs it.

Triangular wave generating circuit 42

Triangular wave generating circuit 42 generates a triangular wave signal and outputs it to the positive input terminals of comparators 32a-32c.

Comparators 32a-32c

Comparators 32a-32c compare error signals VD1-VD3 input from error amplifying unit 26 with the triangular wave signal input from triangular wave generating circuit 42, generating PWM signals, which are output to drive circuits 34a-34c, respectively.

Drive circuits 34a-34c

When control signals CH1ENA-CH3ENA (ENA1) input from sequence control unit 3, control signal ENA2 input from SCP error latch circuit 40, and control signal ENA3 input from power source voltage reset circuit 44 have logic values of 1, drive circuits 34a-34c output the PWM signals input from comparators 32a-32c as driving signals COUT1-COUT3 to output circuits 12a-12c (FIG. 1), respectively.

Output circuits 12a-12c

FIG.9 is a diagram illustrating the configuration of output circuits 12a-12c shown in FIG.1.

As shown in FIG.9, each of output circuit 12a-12c comprises switching transistor Q120, smooth capacitors C120 and C122, inductor L120, and diode D120, and acts as a step-down converter with a configuration identical [to the other output circuits].

By means of the aforementioned constituent parts, output circuits 12a-12c switch the electric power of voltage VIN to step down the voltage, perform rectification and smoothing, and output the electric power of voltage VOUT to a load (not shown in the Figure). Step-down output circuits 12a-12c are explained in this embodiment; however, it is also possible to use step-up or inverting output circuits.

Operation of switching regular 1

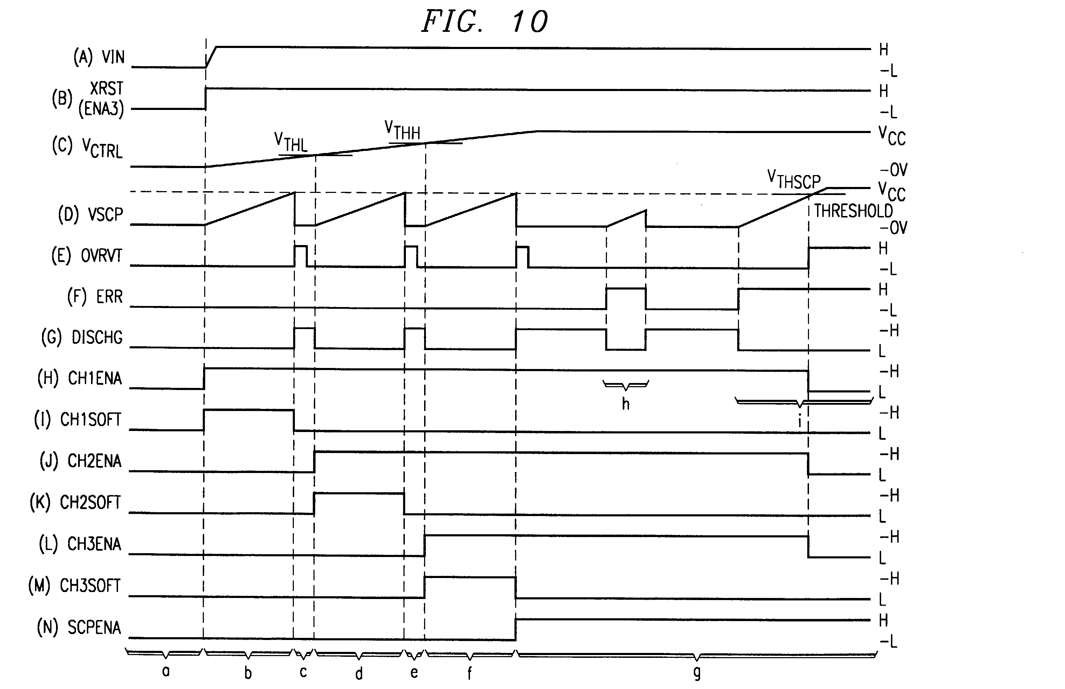

In the following, the operation of switching regulator 1 will be explained with a focus on drive unit 2 [and] with reference to FIG.10.

FIGS. 10(A)-(N) are timing charts showing the timing of the operation of the various parts of drive unit 2 shown in FIG.10.

As shown in FIG.10(A), when a power source is switched in at the very beginning of period b to start switching regulator 1 (FIG.1), power source voltage reset circuit 44 deactivates control signal ENA3 (reset signal XRST) (makes it logic value 1) as shown in FIG.10 (B) starting the operations of the various parts in drive unit 2. In this Figure, control signal ENA3 rises together with the power source voltage, in the actual circuit, however, the power source voltage rises first, and control signal ENA3 begins to rise after a prescribed period of time.

Capacitor C1 in start control unit 22 (FIG.3) is charged gradually between period b and period f, and voltage signal $V_{CTRL}$ rises gradually as shown in FIG. 10(C).

Capacitor C2 in SCP unit 24 (FIG.4) is charged during period b, and voltage signal VSCP rises as shown in FIG.10(D).

At the very beginning of period b, channel decoder circuit 300 in sequence control unit 3 (FIG.7) sets the logic value of control signal CH1ENA to 1 as shown in FIG.10(H), and CH1 soft start latch circuit 302 sets the logic value of control signal CH1SOFT to 1 as shown in FIG.10(I), initiating the soft start of output circuit 12a.

During period b (during the soft start of output circuit 12a, error amplifier 260 in error amplifying unit 26 detects and amplifies the error between voltage signal VSCP and the output voltage of output circuit 12a divided by voltage dividing circuit 10, and outputs [the amplified error] as error signal VD1 to comparator 32a.

Comparator 32a compares the triangular wave signal input from triangular wave generating circuit 42 with error signal VD1, generating a PWM signal which is output to drive circuit 34a.

Drive circuit 34a drives output circuit 12a by means of the PWM signal input from comparator 32a. Output voltage VOUT of output circuit 12a gradually rises in response to voltage signal VSCP.

When voltage signal VSCP reaches threshold voltage $V_{THSCP}$ at the very beginning of period of c, SCP unit 24 sets the logic value of control signal OVRVT to 1 as shown in FIG.10(E), and CH1 soft start latch circuit 302a sets the logic value of control signal CH1SOFT to O (FIG.10(I)) ending the soft start of output circuit 12a.

After the end of the soft start, error amplifier 260 in error amplifying unit 26 amplifies the output voltage of output circuit 12a input through voltage dividing circuit 10 and outputs in as error signal VD1.

Drive circuit 34a drives output circuit 12a by means of the PWM signal input from comparator 32a. Output circuit 12a outputs the electric power of output voltage VOUT, determined by the voltage dividing ratio in voltage dividing circuit 10, to a load.

Discharge control circuit 306 in sequence control unit 3 sets the logic value of control signal DISCHG to 1, discharging capacitor C2 in CSP unit 24 during the period from the time when voltage signal VSCP reaches threshold voltage $V_{THSCP}$ to the time when voltage signal $V_{CTRL}$ reaches threshold voltage $V_{THL}$. As a result, voltage signal VSCP becomes O V.

When voltage signal $V_{CTRL}$ reaches threshold voltage $V_{THL}$ at the very beginning of period of d, control signal DISCHG falls. Channel decoder circuit 300 in sequence control unit 3 sets the logic value of control signal CH2ENA to 1 as shown in FIG.10(J), and CH2 soft start latch circuit 302b sets the logic value of control signal CH2SOFT to 1 as shown in FIG.10(K), initiating the soft start of output circuit 12b.

During period d (during the soft start of output circuit 12b), error amplifier 262 in error amplifying unit 26 detects and amplifies the error between voltage signal VSCP and the output voltage of output circuit 12b divided by voltage dividing circuit 10, and outputs [the amplified error] as error signal VD2 to comparator 32b.

Comparator 32b compares the triangular wave signal input from triangular wave generating circuit 42 with error signal VD2, generating a PWM signal which it output to drive circuit 34b.

Drive circuit 34b drives output circuit 12b by means of the PWM signal input from comparator 32b. Output voltage VOUT of output circuit 12b gradually rises in response to voltage signal VSCP.

When voltage signal VSCP reaches threshold voltage $V_{THSCP}$ at the very beginning of period e, SCP unit 24 sets the logic value of control signal OVRVT to 1, and CH2 soft start latch circuit 302b sets the logic value of control signal CH2SOFT to O (FIG.10(K)), ending the soft start of output circuit 12b.

After the end of the soft start, error amplifier 262 amplifies the output voltage of output circuit 12b input through voltage dividing circuit 10 and outputs it a error signal VD2.

Drive circuit 34b drives output circuit 12b by means of the PWM signal input from comparator 32b. Output circuit 12b outputs the electric power of output voltage VOUT, determined by the voltage dividing ratio in voltage dividing circuit 10, to a load.

Discharge control circuit 306 in sequence control unit 3 sets the logic value of control signal DISCHG to 1, discharging capacitor C2 in SCP unit 24 during the period from the time when voltage signal VSCP reaches threshold voltage $V_{THSCP}$ to the time when voltage signal $V_{CTRL}$ reaches threshold voltage $V_{THL}$. As a result, voltage signal VSCP becomes O V.

When voltage signal $V_{CTRL}$ reaches threshold voltage $V_{THH}$ at the very beginning of period f, control signal DISCHG fails. Channel decoder circuit 300 in sequence control unit 3 sets the logic value of control signal CH3ENA to 1 as shown in FIG.10(L), and CH3 soft start latch circuit 302c sets the logic value of control signal CH3SOFT as shown in FIG.10(M), starting the soft start of output circuit 12c.

During period f (during the soft start of output circuit 12c), error amplifier 264 in error amplifying unit 26 detects and amplifies the error between voltage signal VSCP and the output voltage of output circuit 12c divided by voltage dividing circuit 10, and outputs [the amplified error] as error signal VD3 to comparator 32c.

Comparator 32c compares error signal VD3 with the triangular wave signal input from triangular wave generating circuit 42, generating a PWM signal which is output to drive circuit 34c.

Drive circuit 34c drive output circuit 12c by means of the PWM signal input from comparator 32c. Output voltage VOUT of output circuit 12c gradually rises in response to voltage signal VSCP.

When voltage signal VSCP reaches threshold voltage $V_{THSCP}$ at the very beginning of period g, SCP unit 24 sets the logic value of control OVRVT to 1, and CH3 soft start latch circuit 302c sets the logic value of control signal CH3SOFT to 0 (FIG.10(M)), ending the soft start of output circuit 12c.

After the end of the soft start, error amplifier 264 amplifies the output voltage of output circuit 12c input through voltage dividing circuit 10 and outputs it as error signal VD3.

Drive circuit 34c drives output circuit 12c by means of the PWM signal input from comparator 32c. Output circuit 32c outputs the electric power of output voltage VOUT, determined by the voltage dividing ratio of voltage dividing circuit 10, to a load.

When voltage signal VSCP (FIG. 10(D)) reaches threshold voltage $V_{THSCP}$, discharge control circuit 306 in sequence control unit 3 sets the logic value of control signal DISCG (FIG.10(G)) to 1, discharging capacitor C2 in SCP unit 24. As a result, voltage signal becomes VSCP becomes 0 V. Also, SCP mode latch circuit 304 in sequence control unit 3 sets the logic value of timing signal SCPENA shown in FIG. 10(N) to , starting the protecting operation (short circuit protection (SCP)) which will stop supplying electric power to output circuits 12a-12c if any of the output voltages of output circuits 12a-12c is out of the normal range.

For example, in range h during period g, when any of the output voltages of output circuits 12a-12c falls or rises such that the values of error signals VD1-VD3 are out of the range of threshold voltage $V_{EL}$ - threshold voltage $V_{EH}$ shown in FIG. 6, error detector 28 sets the logic value of error signal ERR to 1.

When the logic value of error signal ERR becomes 1, and when discharge control circuit 306 in sequence control unit 3 (FIG.7) sets the logic value of control signal DISCHG to 0, capacitor C2 in SCP unit 24 (FIG.4) is charged, and voltage signal VSCP (FIG.10(D)) rises.

In range h, any abnormal output voltage of output circuits 12a-12c is recovered in a short time, and voltage signal VSCP does not each threshold voltage $V_{THSCP}$. Consequently, the supply of electric power to output circuits 12a-12c is not stopped.

Also, for example, in range 1 during period g, when any of the output voltages of output circuits 12a-12c falls or rises so that the values of error signals VD1-VD3 are out of the range of threshold voltage $V_{EL}$ - threshold voltage $V_{EH}$ shown in FIG.7, error detector 28 sets the logic value of error signal ERR to 1.

When the logic of ERR becomes 1, and when discharge control circuit 306 (FIG.7) in sequence control unit 3 sets the logic value of control signal DISCHG to 0, capacitor C2 in SCP unit 24 is charged, and voltage signal VSCP (FIG.10(D)) rises.

In range 1, any abnormal output voltage of output circuits 12a-12c lasts for a long time. When voltage signal VSCP reaches threshold voltage $_{THSCP}$, SCP unit 24 sets the logic value of control signal OVRT to 1.

When SCP unit 24 sets the logic value of control signal OVRVT to 1, channel decoder circuit 300 in sequence control unit 3 (FIG.7) sets the logic values of control signals CH1ENA-CH3ENA (FIGS.10(I), 10(J), and 10(L)) to 0.

When channel decoder circuit 300 sets the logic value of control signals CH1ENA-CH3ENA to 0, drive circuits 34a-34c stop supplying drive signals COUTI-COUT3 to output circuits 12a-2c. As a result, the supply of electric power to output circuits 12a-12c is stopped.

As explained above, in switching regulator 1, it is possible to realise soft start function that enables the output voltages of output circuits 12a-12c to rise gradually during the start period. It is also possible to realise a short circuit protection function which can stop the supply of electric power to output circuits 12a-12c when there is any abnormality in the output voltages of output circuits 12a-12c.

Conventionally, to achieve the soft start function, it is necessary to use a capacitor for setting the time in each output circuit. To achieve the short circuit protection function, it is necessary to form the terminals needed by the aforementioned capacitors on the IC which accommodates the drive circuits.

On the other hand, drive unit 2, a common capacitor C2 in SCP unit 24 is used as the capacitor for setting the time in order to achieve the soft start function and the short circuit protection function. Consequently, and the number of the terminals on the IC accommodating drive unit 2 is also reduced, making it difficult for pin neck to occur.

In the following, a modified example of the present invention will be explained.

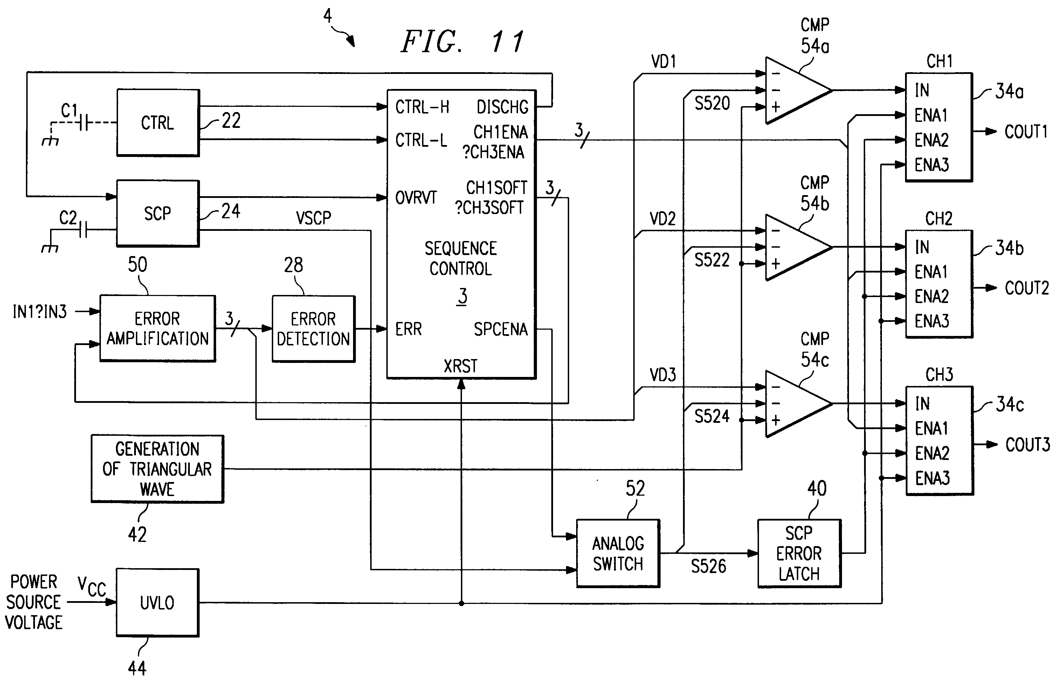

FIG.11 is a diagram illustrating the configuration of a modified example (drive unit 4) of drive unit 2 of the present invention shown in FIG.1.

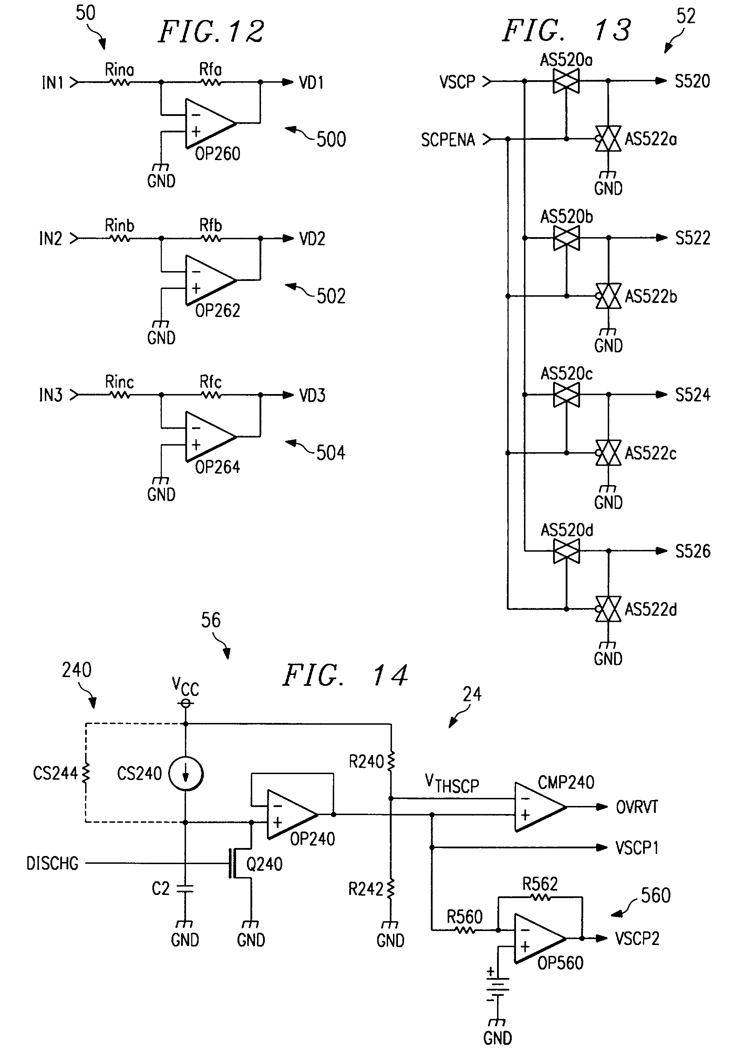

FIG.12 is a diagram illustrating the configuration of error amplifying unit 50 in drive unit 4 shown in FIG.11.

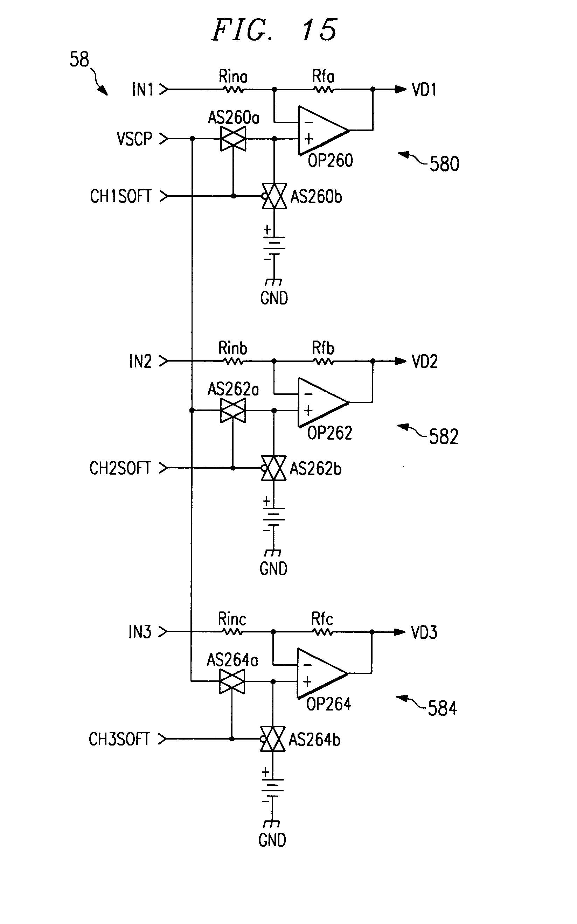

FIG.13 is a diagram illustrating the configuration of analog switch unit 52 in drive unit 4 shown in FIG.11.

In drive unit 4 shown in FIG.11, error amplifying unit 50 replaces error amplifying unit (FIG.5) of drive unit 2 shown in FIG.2. Also, analog switch unit 52 replaces analog switch unit 38 (FIG.8), and comparators 54a-54c replace comparators 32a-32c.

As shown in FIG.12, error amplifying unit 50 in drive unit 4 is formed by removing the analog switches from error amplifying unit 26.

As shown in FIG.13, analog switch unit 52 comprises eight analog switches AS520a-AS540d, AS522a-AS522d. The analog switch unit sends ground potential (O V) or voltage signal VSCP to comparators 54a-54c and SCP error latch circuit 40 in response to the logic value of timing signal SCPENA.

In switching regulator 1, drive unit 4 and drive unit 2 can be interchanged because they have exactly the same properties and functions.

FIG.14 is a diagram illustrating the configuration of a modified example (SCP unit 56) of SCP unit 24 shown in FIG.4.

SCP unit 56 is formed by adding an adder 560 to SCP unit 24. Adder 560 comprises op-amp OP560, resistors R560 and R562, as well as a voltage source.

Adding circuit 560 outputs voltage signal VSCP2, which is obtained by adding the output voltage of the voltage source to voltage signal VSCP1, together with voltage signal VSCP1 output from SCP unit 24.

The voltage of voltage signal VSCP can be adjusted by adding said adder 560 in SCP unit 24.

FIG.15 is a diagram illustrating the configuration of a modified example (error amplifying unit 58) of error amplifying unit 26 shown in FIG.5.

As shown in FIG.15, error amplifying unit 58 comprises three error amplifiers 580-584. Error amplifiers 580-584 are formed by adding power sources to error amplifiers (260)-(264), respectively.

The voltages of error signals VD1-VD3 can be adjusted by adding a power source to each of the error amplifiers in error amplifying unit 26.

In this embodiment, there are three output circuits 12a-12c. However, it is possible to use any number of output circuits by appropriately modifying switching regulator 1.

In this embodiment, the soft start of each output circuit is performed in response to the voltage of voltage signal $V_{CTRL}$ generated by the time constant circuit in start control unit 22. However, it is also possible to use other methods. For example, a pulse signal sent from outside is counted, and the soft start of each output circuit is performed in response to the counted value.

In this embodiment, drive unit 2 is used in a switching regulator. However, an appropriately modified drive unit 2 also can be used in series regulator or other power source devices.

As explained above, according to the present invention, it is possible to use a common time constant circuit (capacitor) for the soft start circuits of multiple power source devices.

When a common time constant circuit (capacitor) is used for the soft start circuits of multiple power source devices as described in the present invention, it is possible to reduce the number of terminals used for the capacitors attached to the IC in which multiple switching transistors are assembled. Consequently, pin neck can be prevented.

**Claims**

1. A power source device comprising:

a first timing signal generating means for generating a first timing signal showing the timing for starting multiple power sources;
a starting waveform generating means for generating waveforms of the output voltages of the multiple power sources at a starting time in response to the first timing signal;
an output voltage waveform generating means for generating waveforms of the output voltages of the multiple power sources based on the preset reference output voltages of the multiple power sources and on waveforms of the output voltages generated when the multiple power sources are started; and
a power source driving means for driving the multiple power sources based on the generated waveforms of the output voltages of the multiple power sources.

2.  The power source driving device of Claim 1 wherein the starting waveform signal generating means comprises:

    a time constant means having a capacitor;
    a charge/discharge means for charging and discharging the capacitor of the time constant means in response to the first timing signal; and
    a waveform allocation means for allocating the output voltage of the time constant means as the waveforms of the output voltages of the multiple signal.

3.  The power source driving device of Claim 1 or Claim 2 further comprising:

    a second timing signal generating means for generating a second timing signal in response to the first timing signal to show that all of the multiple power sources have been started;
    an output voltage detection means responsive to the second timing signal for determining the output voltage of each of the power sources and for detecting output voltages in a prescribed range; and
    a drive stopping means for stopping the operation of the power source driving means and for driving the multiple power sources when the output voltage of any of the multiple power sources is found to be out of the prescribed range.

*FIG. 1*

POWER SOURCE VIN

OUTPUT 12a → VOUT1

COUT1

OUTPUT 12b → VOUT2

COUT2

OUTPUT 12c → VOUT3

COUT3

10 VOLTAGE DIVISION

IN1?IN3

2 DRIVING

3

3

*FIG. 3*

220

$V_{CC}$

22

R226

CS220

R220

$V_{THH}$

CMP220 → CTRL–H

$V_{CTRL}$

C1

R222

$V_{THL}$

CMP222 → CTRL–L

R224

GND

*FIG. 4*

240

$V_{CC}$

24

CS244

CS240

R240

$V_{THSCP}$

CMP240 → OVRVT

OP240

→ VSCP

DISCHG

C2

Q240

R242

GND        GND        GND

FIG. 2

26

IN1 Rina Rfa VD1

VSCP AS260a
OP260 260

CH1SOFT AS260b
GND

IN2 Rinb Rfb VD2

AS262a
OP262 262

CH2SOFT AS262b
GND

IN3 Rinc Rfc VD3

AS264a
OP264 264

CH3SOFT AS264b
GND

*FIG. 5*

*FIG. 6*

$V_{CC}$ 28

R280 R284 $V_{EH}$ CMP280

VD1 OR280 ERR

VD2

VD3 $V_{EL}$ CMP282

R282 R286

GND

*FIG. 7*

*FIG. 8*

*FIG. 9*

14

*FIG. 10*

FIG. 11

EP 0 845 852 A2

*FIG.12*

50

IN1 — Rina — Rfa — VD1
OP260
500
GND

IN2 — Rinb — Rfb — VD2
OP262
502
GND

IN3 — Rinc — Rfc — VD3
OP264
504
GND

*FIG. 13*

52

VSCP — AS520a — S520
SCPENA — AS522a
GND

AS520b — S522
AS522b
GND

AS520c — S524
AS522c
GND

AS520d — S526
AS522d
GND

56

*FIG. 14*

240

24

$V_{CC}$

CS244  CS240

R240  $V_{THSCP}$  CMP240  OVRVT

OP240  VSCP1

DISCHG  Q240

C2  R242

R562  560

R560  OP560  VSCP2

GND  GND  GND  GND

## FIG. 15